# EUROPÄISCHE PATENTANMELDUNG

(11) **EP 2 330 082 A2**
(43) Veröffentlichungstag der Anmeldung: **08.06.2011**
(21) Anmeldenummer: 10008790.7
(22) Anmeldetag: 24.08.2010
(51) Int. Cl.: C02F 1/50, C02F 1/72, A01N 59/16

(54) **Reinigungs- sowie Desinfektionsmittel sowie dessen Verwendung**

(30) Priorität: 16.10.2009 DE 102009049824
(71) Anmelder: Sanosil Service GmbH, 82480 Farchant (DE)
(72) Erfinder: Schlottauer, Tim, 81371 München (DE)
(74) Vertreter: Säger, Manfred

(57) **Zusammenfassung**

Ein ein Silber (Ag) aufweisendes Reinigungs- und Desinfektionsmittel für von in Fahrzeugen wie Wohnwagen oder Campingwagen befindlichen Trink- und Brauchwasseranlagen, ist gekennzeichnet durch zwei Komponennten nämlich als erste Komponente ein (trockenes) kristalline Feststoffe bildendes Salz in fester Form der Peroxomonoschwefelsäure oder Peroxodischwefelsäure und als zweite Komponente ein in Wasser lösliches Silbersalz.

## Beschreibung

Die Erfindung betrifft ein gattungsgemässes, Silber (Ag) aufweisendes Reinigungs- und Desinfektionsmittel für Trink- und Brauchwasser.

Solche Mittel können prinzipiell überall eingesetzt werden. Insbesondere in Freizeitfahrzeugen wie Wohnmobilen und -wagen ist das Problem aber gravierend. Zwar gewährleisten die Wasservorratsbehälter Unabhängigkeit von der öffentlichen Wasserversorgung. Die Verfügbarkeit von Wasser zum Trinken, Kochen und für die tägliche Hygiene zu jeder Zeit und an jedem Ort, birgt aber -neben der Vielzahl von Vorteilen- wenige, aber gravierende Risiken. Ein solches besteht, wie eingangs schon erwähnt- in der mikrobiologischen Kontamination des eingelagerten Wassers. Das Wachstum von Mikrorganismen wird durch längere Verweilzeiten und vor allem durch erhöhte Temperaturen in den Sommermonaten oder beim Aufenthalt in Ländern mit warmen Klima gefördert. Werden erschöpfte Wasservorräte wieder eingelagert, ohne die Tanks und Wasserleitungen in den Campingfahrzeugen zuvor von der mikrobiologischen Kontaminationen zu befreien, beschleunigt sich das Wachstum der Keime und führt zu massiven biologischen Verunreinigungen und zu daraus resultierenden Gesundheitsrisiken.

Es ist ein solches gattungsgemässes Mittel bekannt (DE 36 45 266 C2) und weist ein Wasser aufweisendes Konzentrat mit darin gelöstem Silber und Wasserstofferoxid (H₂O₂) auf. Es dient dazu, Keime zu entfernen und das mikrobiologische Wachstum in den Behältern für das Trink- und Brauchwasser zu unterbinden. Die Wirkung dieses Mittels System basiert -einfach ausgedrückt- aus den synergistischen Wirkungen des Wasserstoffperoxids mit in Wasser löslichem Silber.

Dieses gattungsgemässe, flüssiges Wasserstoffperoxid mit Beimischung von in Wasser löslichem Silber aufweisende Mittel ist einkomponentig und flüssig, was bei Standardanwendung von Vorteil ist. Weil Wasserstoffperoxid zum -wenn auch geringem- Zerfall neigt, müssen die Verpackungen wie Flaschen oder Kanister mit sogenannten Entgasungsventilen ausgestattet werden, damit die Verpackungen nicht durch den freiwerdenden Sauerstoff aufgebläht oder sogar zum Bersten gebracht werden. Durch diese Entgasungsventile kann bei leichtfertigem und unsachgemäßem Umgang jedoch der Inhalt austreten und stellt damit ein Sicherheitsrisiko dar. Für den Einsatz z.B. in mobilen Einrichtungen und durch Laien angewendet, kann dieses bekannte Mittel daher durchaus problematisch werden.

Der Erfindung liegt die Aufgabe zugrunde, ein weniger problematisches Mittel vorzuschlagen.

Sauerstoff des Kaliumperoxomonosulfats, eine stark mikrobiologische Wirkung und andererseits eine destabilisierende Wirkung auf vorzugsweise das Kaliumperoxomonosulfat, was zur Folge hat, dass es schneller zerfällt und auch schneller wirksamer Sauerstoff, weiter durch die sauere Basis der Silberkomponente unterstützt, freigesetzt wird.

Die prinzipielle Wirkung stellt sich dabei wie folgt dar:
Komponente 1:

   K₂S0₅ + H₂O ------> K₂S0₄ + H₂O₂

   H₂0₂ ------> H₂O + O

   oder

   K₂S₂0₈ + H₂O ------> KHSO₂ + H₂0₂

   H₂0₂ ------> H₂O + O
Komponente 2:

   Ag⁺ (lösliches Silbersalz in sauerem Medium)

Sowohl der freiwerdende atomare Sauerstoff als auch das Silberion Ag⁺ wirken toxisch auf die Zellen der Mikroorganismen sowie Keime und töten diese sehr schnell ab.

Dem Reinigungs- und Desinfektionsschritt mit dem erfindungsgemässen Mittel geht in aller Regel eine

Diese Aufgabe wird bei einer gattungsgemässen Mittel nach dem Oberbegriff des Hauptanspruchs erfindungsgemäss durch dessen kennzeichnende Merkmale gelöst, also durch zwei Komponennten nämlich als erste Komponente ein (trockenes) kristalline Feststoffe bildendes Salz der Peroxo-mono oder -dischwefelsäure und als zweite Komponente ein in Wasser lösliches Silbersalz. Vorzugsweise ist dabei die zweite Komponente als das Silbersalz in einer sauren Martix ausgebildet. Besonders effektiv gestaltet sich das erfindungsgemässe Mittel, wenn als Salz der ersten Komponenete Kaliumperoxomonosulfat, "Kaliumpersulfat" oder KPS genanntes Kaliumperoxidisulfat verwendet wird.

Kaliumpersulfat weist ein sehr hohes Oxidationspotential auf und entspricht in der Wirkung etwa 35%igem Wasserstoffperoxid. Dabei ist die Substanz kristallin und in isoliertem Zustand in Form der von der zweiten Komponente getrennt zu lagernden ersten Komponente stabil.

Erfindungsgemäss ist sind also in Abweichung von gattungsgemässen Mitteln zwei gesonderte Komponenten vorgesehen, von denen zumindest die erste, vorzugsweise auch die zweite Komponenet in fester Form und nicht flüssig vorliegt.

Zur Verwendung wird die erste Komponente, vorzugsweise Kaliumperoxomonosulfat in dem zu entkeimenden Wasser gelöst. Die zweite Komponente, die dem Wasser zugegeben wird, enthält das darin auch lösliche Silber in Form einer Verbindung, z.B. eines Salzes in saurer Matrix.

Das Silber hat einerseits, zusammen mit dem Entfernung von anorganischen Belägen in den Behältern (z.B. Tanks, Leitungen und Boilern einer Campinganlage) voraus, da diese Beläge in hohem Maße mikrobiologisch belastet sein können, und, falls sie nicht entfernt werden, zu einer sehr schnellen Rekontamination der Wasseranlage führen können.

Empfohlene Vorgehensweise für die hygienische "Konditionierung" einer Wasseranlage:
1. Schritt: Entkalkung des gesamten Wasserkreislaufs mit einem geeigneten Wirkstoff.
2. Schritt Entkeimung des gesamten Wasserkreislaufs mit den beiden Komponeneten des erfindungsgemässen Reinigungs- und Desinfektionsmittels
3. Schritt Spülung des Systems mit einwandfreiem Trinkwasser
4. Schritt: Wiederbefüllung der Wasserbehälter

Werden Behälter in Freizeitfahrzeugen wie Wohnmobilen und -wagen gereinigt, so empfehlen sich die Reinigungsschritte 1, 2, 3 und 4 in regelmäßigem Abstand während der Saison; die Reinigungsschritte 1, 2 und 3 hingegegen am Ende oder vor Beginn der Saison.

## Patentansprüche

1. Silber (Ag) aufweisendes Reinigungs- und Desinfektionsmittel für Trink- und Brauchwasser, **gekennzeichnet durch** zwei Komponennten nämlich als erste Komponente ein (trockenes) kristalline Feststoffe bildendes Salz der Peroxo-mono oder -dischwefelsäure und als zweite Komponente ein in Wasser lösliches Silbersalz.

2. Mittel nach einem der vorhergehenden Ansprüche, **dadurch gekennzeichnet, dass** die zweite Komponente als das Silbersalz in einer sauren Martix ausgebildet ist.

3. Mittel nach Anspruch 2, **dadurch gekennzeichnet, dass** das Silber als Ion (Ag⁺) vorliegt.

4. Mittel nach einem der vorhergehenden Ansprüche, **dadurch gekennzeichnet, dass** das Salz der anorganischen Säure als erste Komponenete Kaliumperoxomonosulfat ist.
